# DEMANDE DE BREVET EUROPEEN

(11) **EP 1 211 456 A1**
(43) Date de publication de la demande: **05.06.2002**
(21) Numéro de dépôt: 01403030.8
(22) Date de dépôt: 27.11.2001
(51) Int. Cl.: F21S 8/10, B60Q 1/26

(54) **Feu de signalisation pour véhicule comprenant un porte-lampe comportant un support isola sur lequel reposent les lames conductrices**

(30) Priorité: 29.11.2000 FR 0015402
(71) Demandeur: VALEO VISION, 93000 Bobigny (FR); Pollmann Ernst Pollmann Uhren & Apparatebau OHG, 3822 Karlstein (AT)
(72) Inventeur: Luneau, Olivier, 95430 Auvers sur Oise (FR); Brosseron, Vincent, 95600 Eaubonne (FR); Duplessy, Régis, 93012 Bobigny Cedex (FR)
(74) Mandataire: Le Forestier, Eric

(57) **Abrégé**

Le feu de signalisation pour véhicule comprend un porte-lampe comportant :
- un support (4) électriquement isolant présentant une plus grande dimension suivant une première direction (6) ; et
- des lames (8) électriquement conductrices reliées au support et formées de tronçons de lames.

Les lames ou les tronçons de lames qui s'étendent parallèlement à la première direction (6) et les lames ou les tronçons de lames qui s'étendent parallèlement à une deuxième direction (16) perpendiculaire à la première direction forment une majorité des lames ou des tronçons de lames du support.

## Description

L'invention concerne les feux de signalisation pour véhicule automobile et notamment leur porte-lampe.

On connaît des feux de signalisation pour véhicule comprenant un porte-lampe comportant un support en matière plastique électriquement isolante et des lames métalliques reposant sur ce support. Le porte-lampe comporte des douilles de réception des lampes et un emplacement de connexion au connecteur du véhicule. Les lames assurent la connexion électrique entre les différents organes associés au porte-lampe, notamment le connecteur et les lampes. Pour fabriquer un tel porte-lampe, un procédé classique consiste à rapporter les lames métalliques sur le support après que celui-ci a été fabriqué par moulage. Toutefois, cette opération est relativement longue. C'est pourquoi, on cherche d'autres procédés de fabrication du porte-lampe. En particulier, il serait souhaitable de pouvoir fabriquer le porte-lampe par surmoulage de la matière plastique du support sur les lames. En effet, une telle opération est relativement rapide à mener. Toutefois, on se heurte alors à des difficultés dues aux différences de coefficient de dilatation entre la matière plastique du support et le métal formant les lames. Cette différence étant très importante, lors du refroidissement du porte-lampe, le retrait de la matière plastique est susceptible de modifier les positions respectives des lames, voire de déformer l'ensemble du porte-lampe.

Un but de l'invention est de fournir un procédé de fabrication de porte-lampe qui réduise les risques de déformation et de mauvais positionnement générés par la différence de comportement de la matière du support et des lames durant le refroidissement.

En vue de la réalisation de ce but, on prévoit selon l'invention un feu de signalisation pour véhicule comprenant un porte-lampe comportant :
- un support électriquement isolant présentant une plus grande dimension suivant une première direction ; et
- des lames électriquement conductrices reliées au support et formées de tronçons de lames,
dans lequel les lames ou les tronçons de lames qui s'étendent parallèlement à la première direction et les lames ou les tronçons de lames qui s'étendent parallèlement à une deuxième direction perpendiculaire à la première direction forment une majorité des lames ou des tronçons de lames du support.

Ainsi, lors du refroidissement, le retrait de la matière formant le support et de celle formant les lames s'effectue principalement suivant deux directions privilégiées. On a donc une meilleure maîtrise de ce retrait et on peut plus facilement en prévenir les conséquences. On constate qu'il devient alors possible de fabriquer le porte-lampe du feu par surmoulage de la matière du support sur les lames électriquement conductrices sans rencontrer de problèmes majeurs de mauvais positionnement des lames et de déformation du porte-lampe.

Avantageusement, une majorité des lames et/ou des tronçons s'étendent parallèlement à la première direction. Ainsi, on privilégie principalement une unique direction pour le retrait, ce qui permet de prévenir au mieux les conséquences de la différence de comportement des deux matières lors du refroidissement.

De préférence, le support comporte au moins un pont recouvrant au moins une des lames en laissant la lame libre de glisser par rapport au pont.

Ainsi, lors du refroidissement du porte-lampe, la lame demeure libre de se positionner par rapport au support suivant au moins une direction. A contrario, si la lame était fixée rigidement à une face du support, on augmenterait les risques qu'elle provoque durant le refroidissement une déformation de l'ensemble du porte-lampe par effet bilame.

Avantageusement, le pont est agencé pour laisser la lame libre de glisser parallèlement à une direction principale du tronçon de la lame recouverte par le pont.

Avantageusement, au moins un des tronçons de lame a une forme non plane et s'étend localement en saillie du support. Ainsi, on crée une réserve de matière en vue du retrait, ce qui réduit encore les risques de déformer l'ensemble du support ou d'altérer le positionnement des lames les unes par rapport aux autres.

Avantageusement, le ou chaque tronçon de lame en saillie a une forme de bossage.

De préférence, le support présente une ouverture traversante au droit du ou de chaque tronçon en saillie.

Ainsi, il est possible durant le refroidissement d'introduire à travers cette ouverture un outil permettant de donner au tronçon en saillie la forme la plus adaptée pour limiter au mieux les problèmes susceptibles d'être engendrés durant le refroidissement de la pièce.

Le feu selon l'invention pourra en outre présenter au moins l'une quelconque des caractéristiques suivantes :
- le support forme au moins une douille de réception d'une lampe ;
- l'une des lames s'étend au centre de la douille ;
- au moins une des lames est réalisée dans un métal la rendant apte à former un ressort de maintien de la lampe dans la douille ;
- la ou chaque douille présente un premier côté permettant d'introduire la lampe dans la douille, et un deuxième côté opposé au premier côté et présentant une ouverture apte à laisser voir la lampe reçue dans la douille ;
- la ou chaque douille comprend des parties électriquement conductrices respectivement d'une seule pièce avec certaines des lames ; et
- le support comporte un boîtier de connexion à un connecteur du véhicule.

On prévoit également selon l'invention un porte-lampe pour feu de véhicule comportant un support électriquement isolant présentant une plus grande dimension suivant une première direction et des lames électriquement conductrices reliées au support et formées de tronçons de lames, dans lequel les lames ou les tronçons de lames qui s'étendent parallèlement à la première direction et les lames ou les tronçons de lames qui s'étendent parallèlement à une deuxième direction perpendiculaire à la première direction forment une majorité des lames ou des tronçons de lames du support.

On prévoit par ailleurs selon l'invention un procédé de fabrication d'un feu de signalisation pour véhicule comprenant les étapes consistant à :
- fournir des lames de porte-lampe de feu, ces lames étant électriquement conductrices et formées de tronçons de lames ; et
- surmouler sur les lames un support du porte-lampe, ce support étant électriquement isolant et présentant une plus grande dimension suivant une première direction, les lames étant agencées de sorte que les lames ou les tronçons de lames qui s'étendent parallèlement à la première direction et les lames ou les tronçons de lames qui s'étendent parallèlement à une deuxième direction perpendiculaire à la première direction forment une majorité des lames ou des tronçons de lames du support.

Le procédé selon l'invention pourra en outre présenter au moins l'une quelconque des caractéristiques suivantes :
- au cours d'une étape de refroidissement faisant suite au surmoulage, on déforme localement au moins un des tronçons en lui donnant une forme non plane pour qu'il s'étende en saillie du support ; et
- durant le surmoulage, on ménage dans le support une ouverture traversante en regard du ou de chaque tronçon destiné à être déformé, puis à l'issue du surmoulage, on introduit un outil dans la ou chaque ouverture pour déformer le tronçon.

D'autres caractéristiques et avantages de l'invention apparaîtront encore dans la description qui va suivre d'un mode préféré de réalisation donné à titre d'exemple non limitatif. Aux dessins annexés :
- les figures 1 et 2 sont deux vues en perspective respectivement de dessus et de dessous d'un porte-lampe d'un feu selon un mode préféré de réalisation de l'invention ;
- la figure 3 est une vue à plus grande échelle d'un détail du porte-lampe de la figure 1 ;
- les figures 4 et 5 sont deux vues en perspective illustrant deux variantes de réalisation d'une douille du porte-lampe de la figure 1 ; et
- les figures 6 et 7 sont deux vues en perspective d'un détail du porte-lampe de la figure 1 et illustrent respectivement deux étapes de la fabrication.

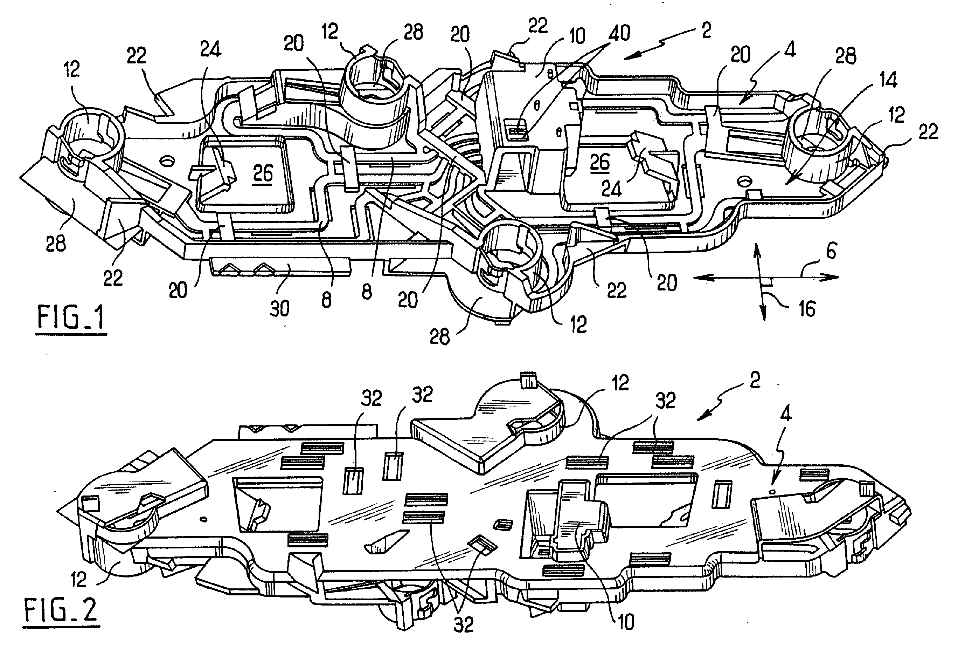

On a illustré aux figures 1 à 3, un porte-lampe 2 d'un feu selon un mode préféré de réalisation de l'invention. Ce porte-lampe comporte un support 4 de forme générale plane bien qu'il présente un certain nombre de reliefs sur chacune de ses deux faces principales. Le support 4 s'étend principalement selon une direction correspondant à sa longueur et désignée par la direction 6 sur la figure 1. Le support est réalisé dans une matière électriquement isolante telle qu'un polymère technique comme une résine polyacétal (POM). Une telle résine ne nécessite pas l'assemblage ultérieur d'un boîtier connecteur spécifique sur le porte-lampe afin de répondre à une exigence sévérisée de tenue à l'arrachement du porte-lampe. Le support 4 est réalisé par injection comme on le verra plus loin.

Le support 4 comporte par ailleurs un connecteur 10 destiné à recevoir un boîtier de connexion du véhicule de façon à connecter le feu au véhicule en vue de son alimentation en courant électrique et de sa commande.

Le support 4 présente des douilles 12 ici au nombre de quatre. Chacune des douilles est destinée à recevoir une lampe du feu, en l'espèce une lampe à baïonnette par exemple de type P21W, P21/5W, R5W ou PY21W. Les douilles comprennent un corps en matière plastique d'une seule pièce avec le support 4.

Le porte-lampe 2 comporte des lames métalliques 8 aptes à connecter électriquement entre eux les différents organes associés au porte-lampe, en particulier le connecteur 10 et les lampes logées dans les douilles 12. Les lames 8 s'étendent principalement dans un plan unique commun et sont disposées contre la face supérieure 14 du support 4 comme le montre la figure 1. Chacune des lames 8 est formée d'une seule pièce et on distingue sur chaque lame différents tronçons, en particulier des tronçons rectilignes et des tronçons courbes. En l'espèce, la majorité des tronçons des lames s'étendent parallèlement à la direction 6 ou parallèlement à une direction 16 perpendiculaire à la direction 6 et parallèle au support. Il s'ensuit que la majorité des tronçons des lames s'étendent à angle droit les uns des autres. Seuls quelques rares tronçons s'étendent en oblique ou bien présentent une courbure prononcée sur une grande longueur.

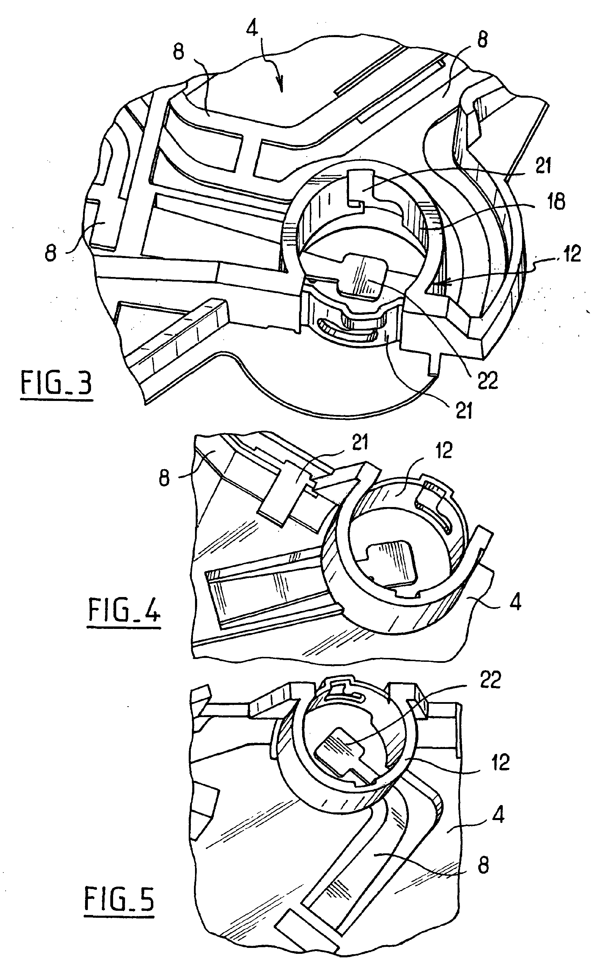

Chacune des douilles 12 comporte deux pièces métalliques qui sont en l'espèce formées d'une seule pièce avec deux respectives des lames 8. Ainsi, en référence à la figure 3, la douille 12 comporte un corps 18 de forme générale cylindrique ouvert à ses deux extrémités axiales. Ce corps cylindrique en matière plastique est surmoulé sur une pièce de contact métallique 21 destinée à venir en contact avec la face latérale du culot de la lampe et l'une des baïonnettes. La douille présente des découpes destinées à la fixation et au positionnement des baïonnettes de la lampe.

Par ailleurs, la douille comporte une deuxième pièce de contact 22 sous la forme d'une languette s'étendant en continuité avec l'une des lames 8 dans le plan de celle-ci et dont l'extrémité s'étend au milieu de la douille en interceptant son axe, près de l'extrémité arrière de la douille. Cette pièce de contact 22 est destinée à venir en contact avec l'extrémité axiale du culot de la lampe.

Comme on le voit, la douille est ouverte vers le dessus à son extrémité axiale pour la réception de la lampe dans la douille. Elle est en outre ouverte à l'arrière, à son autre extrémité axiale en partie inférieure du porte-lampe pour laisser voir l'intérieur de la douille depuis l'arrière du porte-lampe. Ultérieurement, lors du process d'assemblage du porte-lampe sur le socle du feu, la machine d'assemblage comprend des pions qui pénètrent à travers l'extrémité arrière des douilles de façon à vérifier la présence et le verrouillage de chaque lampe dans la douille correspondante. De la sorte, l'absence de lampe dans une douille ou le mauvais positionnement de la lampe dans la douille peut être immédiatement détecté.

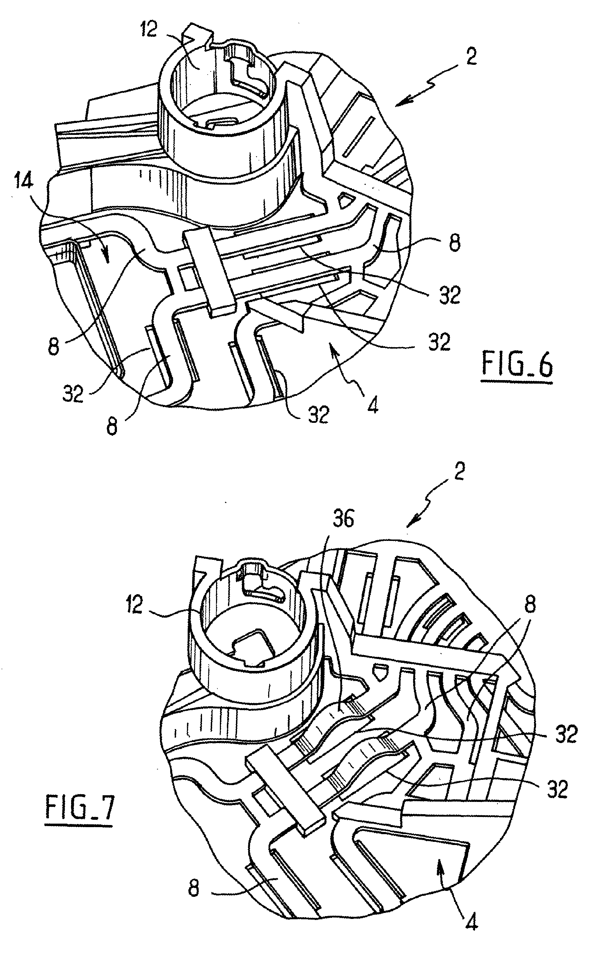

On a illustré aux figures 4 et 5 deux variantes de réalisation des douilles 12 présentant des configurations modifiées des pièces de contact 21, 22. En particulier, à la figure 5, la pièce de contact 22 est coudée.

Les pièces de contact 21, 22 sont chacune d'une seule pièce avec l'une respective des lames. Les lames sont réalisées dans un matériau métallique ayant de bonnes caractéristiques électriques ainsi que des caractéristiques mécaniques lui conférant un effet ressort. Ainsi, les douilles sont conformées de sorte que chaque pièce de contact 22 assure sur la lampe suivant la direction axiale du corps de la douille un effort de pression par exemple compris entre 4 N et 10 N. Un matériau pouvant être utilisé pour les lames est par exemple une tôle d'acier laminée à haute limite élastique. De préférence, cette tôle est prérevêtue d'un matériau conducteur sacrificiel (par exemple du zinc) afin de répondre aux exigences de corrosion.

En-dehors de leur maintien au niveau des douilles 12, toutes les lames 8 du porte-lampe en l'espèce ne sont maintenues à la surface du support 4 que par l'intermédiaire de ponts 20 réalisés en différents endroits à la surface du support. Chaque pont 20 est formé de la même matière que le support et s'étend d'une seule pièce avec celui-ci. Il recouvre une ou plusieurs des lames 8 afin de les prendre en sandwich entre la face supérieure 14 du support et le pont 20 lui-même. Ce recouvrement est réalisé en laissant à chaque lame 8 une liberté de mouvement, de préférence principalement suivant la direction longitudinale du tronçon recouvert par le pont. Comme on le voit sur la figure 1, la plupart des ponts 20 s'étendent suivant la direction 16 de façon à laisser les lames 8 libres de coulisser par rapport au support suivant la direction longitudinale 6 du support.

Le porte-lampe présente des zones spécialement dédiées à la réalisation de fonctions d'appui et de centrage par rapport à d'autres pièces du feu, notamment par rapport au socle. Ces différentes zones portent les références 22 sur les figures. Certaines parties 24 du porte-lampe sont destinées à participer à une fonction d'accrochage du porte-lampe sur le socle du feu de façon connue en soi. Il s'agit ici de deux ergots 24 s'étendant en saillie dans deux ouvertures traversantes 26 respectives du support. De plus, le porte-lampe présente des zones 28 généralement contiguës aux douilles 12 ou s'étendant à l'intérieur de celles-ci et assurant des fonctions de protection des pièces de contact des lampes à l'égard des chocs et améliorant également leur isolation électrique. Le porte-lampe 2 comporte à l'un de ses bords une plaquette 30 assurant des fonctions d'identification et de détrompage des différentes versions du porte-lampe (gauche, droite) combinées aux versions conduite à gauche et conduite à droite comme on le verra plus loin.

Le support 4 présente en regard de certains des tronçons de lames, des ouvertures traversantes 32 laissant voir une partie de ces tronçons depuis la face arrière du support.

Le schéma électrique du porte-lampe matérialisé par la disposition des lames en vue de la connexion électrique du connecteur et des douilles n'a pas été décrit et est d'un type classique connu en soi.

En l'espèce, la fabrication du porte-lampe se déroule selon le procédé suivant.

Tout d'abord, on réalise par découpe dans une tôle les lames 8 en leur donnant globalement la configuration et le positionnement relatifs qu'elles doivent présenter une fois le porte-lampe achevé. Les lames sont à ce stade reliées par des ponts de matière provisoires d'une seule pièce avec les lames de sorte que la découpe produit une pièce unique comprenant toutes les lames. Au cours de l'étape de découpe dans la tôle, on emboutit certaines parties de la tôle de façon à former les pièces de contact 21, 22 destinées à être intégrées au corps des douilles et les parties métalliques internes au connecteur 10.

Cette pièce formant les lames est placée dans un moule de surmoulage. Dans ce moule, on surmoule la matière plastique du support 4 sur la pièce comprenant les lames. Au cours de la fermeture du moule, en préalable à l'injection, la plupart des ponts de matière reliant les lames les unes aux autres sont coupés par des outils de coupe prévus à cette fin dans le moule. Les ponts de matière sont donc ainsi supprimés juste avant l'injection. Au cours du surmoulage sont également formés le connecteur 10 et chacune des douilles de lampe.

A l'issu du surmoulage, on ouvre le moule et on extrait la pièce qui amorce alors son refroidissement. Compte tenu des différences de coefficient de dilatation entre la matière plastique du support et les parties métalliques, ce refroidissement produit progressivement une déformation de l'ensemble de la pièce par effet bilame principalement suivant la direction 6, puisque le retrait des deux matières s'effectue principalement suivant la direction longitudinale 6 du support.

Au cours du refroidissement, on dispose le porte-lampe sur une machine de redressement. Cette machine comporte des outils aptes à pénétrer dans les ouvertures 32 du support s'étendant au regard de certains tronçons des lames. S'étendant à travers le support, ces outils sollicitent localement les tronçons en direction opposée au support de façon à les déformer en leur donnant à chacun une forme de bossage. La figure 6 montre ainsi deux des tronçons avant déformation, tandis que la figure 7 montre les mêmes tronçons après déformation. Au cours de cette déformation, les tronçons acquièrent donc une forme non plane et s'étendent en saillie de la face 14 du support et du plan général des lames. Cette déformation locale de certaines des lames permet de compenser les différences de retrait lors du refroidissement, de sorte que la réalisation de ces bossages supprime l'effet bilame et préserve la forme plane du porte-lampe. Bien entendu, au cours de la réalisation des bossages, les lames coulissent sous les ponts de matière plastique 20. Ainsi, cette opération adapte la longueur de chaque lame lors du retrait de la matière plastique dans le but d'obtenir une très haute qualité géométrique et dimensionnelle. Les ouvertures 32 et les tronçons correspondant s'étendent principalement suivant les deux directions 6 et 16, mais certaines s'étendent en oblique. Cette adaptation de la longueur des lames effectue donc une correction dimensionnelle dans plusieurs directions afin de minimiser au mieux les risques de déformation.

En l'espèce, on réalise avec un seul jeu d'outillage (un outillage de découpe du circuit plus un outillage de surmoulage) les versions conduite à gauche et conduite à droite du feu. La distinction entre les deux versions du produit n'est effectuée qu'à la fin du procédé de fabrication lors du contrôle électrique de la pièce. En effet, il est prévu à cet égard au niveau du connecteur 10 deux ponts métalliques 40 entre deux des lames 8, illustrés à la figure 1, qui ne sont pas découpés durant le surmoulage mais restent accessibles après injection de la matière plastique. L'un de ces deux ponts est découpé au choix pour réaliser la version conduite à gauche ou conduite à droite du porte-lampe. Ensuite, on réalise sur le produit le test de conformité électrique. Si ce test est concluant, une zone de la plaquette d'identification 30 est découpée à un endroit prédéterminé en face de la référence adéquate. Cette découpe est ensuite utilisée comme moyen de détrompage et interdit le montage d'un porte-lampe correspondant à un certain côté de conduite sur un socle de feu correspondant à l'autre côté de conduite.

On peut également conformer chacune des douilles 12 de façon à obtenir un effet de détrompage du montage de chaque lampe dans la douille correspondante, dans le cas où chaque douille est destinée à recevoir une lampe d'un modèle spécifique différent des autres douilles.

On pourra prévoir que l'ensemble des lames ou tronçons qui s'étendent parallèlement à la direction 6 et des lames ou tronçons qui s'étendent parallèlement à l'autre direction 16 forment une majorité des lames ou tronçons. On pourra prévoir que les lames ou tronçons qui s'étendent parallèlement à une seule de ces deux directions forment à elles seules une majorité des lames ou tronçons.

Bien entendu, on pourra apporter à l'invention de nombreuses modifications sans sortir du cadre de celle-ci.

On pourra réaliser les bossages sur les tronçons des lames sans orienter les tronçons dans une ou deux directions privilégiées par référence au support.

On pourra déformer les tronçons associés aux ouvertures 32 de sorte qu'ils s'étendent dans les ouvertures et non pas en saillie du support.

## Revendications

1. Feu de signalisation pour véhicule, comprenant un porte-lampe (2) comportant
- un support (4) électriquement isolant présentant une plus grande dimension suivant une première direction (6) ; et
- des lames (8) électriquement conductrices reliées au support et formées de tronçons de lames,
**caractérisé en ce que** les lames ou les tronçons de lames qui s'étendent parallèlement à la première direction (6) et les lames ou les tronçons de lames qui s'étendent parallèlement à une deuxième direction (16) perpendiculaire à la première direction forment une majorité des lames ou des tronçons de lames du support.

2. Feu selon la revendication 1, **caractérisé en ce qu'**une majorité des lames et/ou des tronçons s'étendent parallèlement à la première direction (6).

3. Feu selon l'une quelconque des revendications 1 ou 2, **caractérisé en ce que** le support comporte au moins un pont (20) recouvrant au moins une des lames (8) en laissant la lame libre de glisser par rapport au pont.

4. Feu selon la revendication 3, **caractérisé en ce que** le pont (20) est agencé pour laisser la lame (8) libre de glisser parallèlement à une direction principale du tronçon de la lame recouverte par le pont (20).

5. Feu selon l'une quelconque des revendications 1 à 4, **caractérisé en ce qu'**au moins un des tronçons de lame (8) a une forme non plane et s'étend localement en saillie du support (4).

6. Feu selon la revendication 5, **caractérisé en ce que** le ou chaque tronçon de lame (8) en saillie a une forme de bossage.

7. Feu selon l'une quelconque des revendications 5 ou 6, **caractérisé en ce que** le support (4) présente une ouverture traversante (32) au droit du ou de chaque tronçon en saillie.

8. Feu selon l'une quelconque des revendications 1 à 7, **caractérisé en ce que** le support (4) forme au moins une douille (12) de réception d'une lampe.

9. Feu selon la revendication 8, **caractérisé en ce que** l'une des lames (8) s'étend au centre de la douille (12).

10. Feu selon l'une quelconque des revendications 8 ou 9, **caractérisé en ce qu'**au moins une des lames (8) est réalisée dans un métal la rendant apte à former un ressort de maintien de la lampe dans la douille (12).

11. Feu selon l'une quelconque des revendications 8 à 10, **caractérisé en ce que** la ou chaque douille (12) présente un premier côté permettant d'introduire la lampe dans la douille, et un deuxième côté opposé au premier côté et présentant une ouverture apte à laisser voir la lampe reçue dans la douille.

12. Feu selon l'une quelconque des revendications 8 à 11, **caractérisé en ce que** la ou chaque douille (12) comprend des parties électriquement conductrices (20, 22) s'étendant respectivement d'une seule pièce avec certaines des lames (8).

13. Feu selon l'une quelconque des revendications 1 à 12, **caractérisé en ce que** le support (4) comporte un boîtier de connexion (10) à un connecteur du véhicule.

14. Porte-lampe (4) pour feu de véhicule comportant :
- un support (4) électriquement isolant présentant une plus grande dimension suivant une première direction (6) ; et
- des lames (8) électriquement conductrices reliées au support et formées de tronçons de lames,
**caractérisé en ce que** les lames ou les tronçons de lames qui s'étendent parallèlement à la première direction (6) et les lames ou les tronçons de lames qui s'étendent parallèlement à une deuxième direction (16) perpendiculaire à la première direction forment une majorité des lames ou des tronçons de lames du support.

15. Procédé de fabrication d'un feu de signalisation pour véhicule, **caractérisé en ce qu'**il comprend les étapes consistant à :
- fournir des lames (8) de porte-lampe (4) de feu, ces lames étant électriquement conductrices et formées de tronçons de lame; et
- surmouler sur les lames (8) un support (4) du porte-lampe, ce support étant électriquement isolant et présentant une plus grande dimension suivant une première direction (6), les lames (8) étant agencées de sorte que les lames ou les tronçons de lames qui s'étendent parallèlement à la première direction (6) et les lames ou les tronçons de lames qui s'étendent parallèlement à une deuxième direction (16) perpendiculaire à la première direction forment une majorité des lames ou des tronçons de lames du support.

16. Procédé selon la revendication 15, **caractérisé en ce que**, au cours d'une étape de refroidissement faisant suite au surmoulage, on déforme localement au moins un des tronçons en lui donnant une forme non plane pour qu'il s'étende en saillie du support (4).

17. Procédé selon la revendication 16, **caractérisé en ce que** durant le surmoulage, on ménage dans le support une ouverture traversante (32) en regard du ou de chaque tronçon destiné à être déformé, puis, à l'issu du surmoulage, on introduit un outil dans la ou chaque ouverture pour déformer le tronçon.
